# EUROPEAN PATENT APPLICATION

(11) **EP 2 290 978 A1**
(43) Date of publication of application: **02.03.2011**
(21) Application number: 09754802.8
(22) Date of filing: 29.05.2009
(51) Int. Cl.: H04N 7/173

(54) **SERVER DEVICE, COMMUNICATION METHOD, AND PROGRAM**

(30) Priority: 30.05.2008 JP 2008142745
(71) Applicant: NEC Corporation, Minato-ku Tokyo 108-8001 (JP)
(72) Inventor: OZAWA, Kazunori, Tokyo 108-8001 (JP)
(74) Representative: Glawe, Delfs, Moll
(86) International application number: PCT/JP2009/059855
(87) International publication number: WO 2009/145294

(57) **Abstract**

There is provided a server apparatus that receives a stream containing at least a video signal from a first one of two or more terminals that take part to form a group of terminals, copies the stream or packet received and transmits the so copied stream or packet to those terminals that are different from the first terminal. In this server apparatus, if any other terminal takes part halfway in the group, such problem as picture quality deterioration is to be prohibited from occurring on the terminal side. The server apparatus (150) receives a stream containing at least a video signal from a first one of two or more terminals that take part to form a group of terminals, copies the received stream or packet in part or entirety thereof, and transmits the so copied stream or packet to those terminals that are different from the first terminal. The server apparatus includes a control packet generation/ transmission unit (158) which, in case another terminal takes part anew in the group of terminals halfway during the time of transmitting the copied stream or packet, transmits to the first terminal a command which orders the first terminal to transmit a non-predictive frame (Fig.1).

## Description

### FIELD OF THE INVENTION

### (Reference to related application)

This application is based upon and claims the benefit of the priority of Japanese patent application No. 2008-142745, filed on May 30, 2008, the disclosure of which is incorporated herein in its entirety by reference thereto.

This invention relates to a server apparatus and a communication method. More particularly, it relates to a server apparatus, a communication method and a program in which at least two terminals take part to form a group of terminals and in which a stream or a packet containing a video signal is received from a first terminal and copied, and the so copied stream or packet is sent to a terminal(s) other than the first terminal.

### BACKGROUND

With the extended bandwidth and increased operating speed of a mobile communication network, services or distribution using packet communication may be expected to be increasing. Under these situations, a service in which, when two or more (for example, an N-number of) terminals take part together to form a group of terminals, packet data sent from a first terminal is received and copied and the so copied data are sent to (N-1) terminals other than the first terminal, have already been commenced under the name of PoC (Push to talk over Cellular) insofar as speech is concerned.

In time to come, similar services targeted for a video signal (video PoC or video sharing) are expected to be commenced with the progress of IMS (IP Multimedia Subsystem).

In this case, a video signal is compression-encoded on a terminal side in order to transmit a signal with high efficiency at a low bit rate. Examples of known schemes include ITU-T (International Telecommunication Union Telecommunication Standardization Section) Recommendations H.263 and MPEG-4 (Moving Picture Experts Group phase 4) internationally standardized by ISO/IEC (International Organization for Standardization /International Electrotechnical Commission).

With the H.264/ MPEG-4 AVC (Advanced Video Coding), internationally standardized by ITU-T and ISO/IEC, a moving picture signal may be transmitted more efficiently than is possible with the aforementioned moving picture compression encoding schemes.

In Patent Documents 1, and 2, there is disclosed a configuration of a media distribution system in which, if a frame is lost in transmission, a client notifies a server of the fact of frame loss when the next packet has been correctly transmitted to the client. The server then skips predictive frames of the current predictive coding frame sequence to re-initiate transmission as from the next intra-frame. Patent Document 3 discloses a configuration of a multi-cast network in which, on detection of a channel change request that specifies a requested channel corresponding to a multi-cast group, an intra-frame of the requested channel which is retained is transmitted by way of uni-cast communication. Patent Document 4 discloses a method and an apparatus in which, in transmitting a service data stream, such as a compressed video signal, a non-predictive frame of a larger volume is transmitted only on occurrence of an event and only predictive frames of a smaller volume are transmitted otherwise. In the above Patent Documents, there is not disclosed a server apparatus in which at least two terminals take part to form a group of terminals, a stream or a packet including a video signal, is received from a first one of the terminals and copied, and the stream or packet, thus copied, is transmitted to other terminals different from the first terminal.

[Patent Document 1] JP Patent Kokai Publication No. JP-P2001-285390A
[Patent Document 2] JP Patent Kokai Publication No. JP-P2004-289868A
[Patent Document 3] JP Patent Kokai Publication No. JP-P2005-124193A
[Patent Document 4] JP Patent Kokai Publication No. JP-P2008-504767A

### DISCLOSURE OF THE INVENTION

### PROBLEM TO BE SOLVED BY THE INVENTION

The entire disclosures of Patent Documents 1 to 4 are incorporated herein by reference thereto. The following is an analysis from the standpoint of the present invention.

The video PoC or video sharing, dealing with the video signal, has the following problems:

(a) In case a terminal performs compression encoding of a video signal or video contents, using the aforementioned compression-encoding scheme, the common practice is to introduce a non-predictive frame, termed an I-frame, only at the leading end of contents. I-frames are inserted periodically every several seconds on only extremely rare occasions.

On the other hand, if a new terminal should take part in the group of terminals halfway, it is impossible for the first terminal to insert, at a time point of participation of the new terminal, an I-frame in a packet that has been already transmitted by the first terminal and hence, if a compression-encoded signal from the first terminal is received, decoded and reproduced by the new terminal, the reproduced picture is disturbed from the outset.

There may be a case where a packet which includes video contents and is transmitted from a terminal of the group of terminals taking the initiative (first terminal), is lost on a mobile IP network, for example, and fails to get to the server apparatus. If, in such a case, the server apparatus receives the stream and copies it to transmit the copied stream to terminals other than the first terminal, the video signal, decoded on the terminal side, remains deteriorated for a certain time interval from the loss of the packet, thus drastically deteriorating service quality.

It is therefore an object of the present invention to provide a server apparatus, a method and a program for the server apparatus that receives a stream or packet including at least a video signal, from a first one of two or more terminals that take part to form a group of terminals, copies the stream or packet and transmits the so copied stream or packet to terminals other than the first terminal, and which makes it possible to suppress deterioration in picture quality even for a further mobile terminal that takes part in the group of terminals halfway.

It is another object of the present invention to provide a server apparatus, a method and a program for the server apparatus that receives a stream or packet including at least a video signal, from a first one of two or more terminals that takes part to form a group of terminals, copies the stream or packet and transmits the so copied stream or packet to one or more terminals other than the first terminal, and which, even if a packet transmitted from the first terminal is lost on an IP network and fails to get to the server apparatus, makes it possible to suppress deterioration in picture quality on the terminals.

### MEANS TO SOLVE THE PROBLEM

In one aspect of the present invention, there is provided a server apparatus that receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, wherein the server apparatus comprises a control unit that transmits to the first terminal a command which orders the first terminal to transmit a non-predictive video frame to the server apparatus, in case another terminal takes part anew in the group of terminals halfway during the time of transmitting the copied stream or packet.

According to the present invention, there is also provided a server apparatus that receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, wherein the server apparatus comprises a control unit that transmits to the first terminal a command which orders the first terminal to transmit a non-predictive video frame, in case a packet transmitted from the first terminal is lost and fails to get to the server apparatus.

In another aspect of the present invention, there is also provided a method for communication comprising:
a server apparatus receiving a stream or a packet including at least a video signal and transmitted from a first terminal of a plurality of terminals that take part to form a group of terminals;
the server apparatus copying the received stream or packet received in part or entirety thereof;
the server apparatus transmitting the copied stream or packet to one or more of the terminals different from the first terminal; and
the server apparatus transmitting to the first terminal a command which orders the first terminal to transmit a non-predictive frame to the server apparatus, in case another terminal takes part anew in the group of terminals halfway during the time of transmitting the copied stream or packet.

According to the present invention, there is also provided a method for communication comprising:
a server apparatus receiving a stream or a packet including at least a video signal and transmitted from a first terminal of a plurality of terminals that take part to form a group of terminals;
the server apparatus copying the received stream or packet received in part or entirety thereof;
the server apparatus transmitting the copied stream or packet to one or more of the terminals different from the first terminal; and
the server apparatus transmitting to the first terminal a command which orders the first terminal to transmit a non-predictive video frame to the server apparatus, in case a packet transmitted from the first terminal is lost and fails to get to the server apparatus.

In yet another aspect of the present invention, there is provided a program that causes a server apparatus, which receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, to execute processing comprising:
transmitting to the first terminal a command which orders the first terminal to transmit a non-predictive video frame to the server apparatus, in case another terminal takes part anew in the group of terminals halfway during the time of transmitting the copied stream or packet.

According to the present invention, there is further provided a program that causes a server apparatus, which receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, to execute processing comprising:
transmitting to the first terminal a command which orders the first terminal to transmit a non-predictive video frame to the server apparatus, in case a packet transmitted from the first terminal is lost and fails to get to the server apparatus.

### EFFECT OF THE INVENTION

According to the present invention, in a server apparatus that receives a stream or packet including at least a video signal, transmitted from a first terminal of a plurality of terminals that take part to form a group of terminals, copies a stream or packet and transmits the so copied stream or packet to one or more of the terminals other than the first terminal, a control function is implemented such that it is made possible to suppress deterioration of picture quality on another terminal which newly takes part in the group of terminals halfway. According to the present invention, the above advantageous effect may be achieved without remodeling the terminal.

According to the present invention, a control function is implemented in a server apparatus such that it is made possible to suppress deterioration of picture quality on the terminals in case a packet transmitted from a first terminal taking the initiative among a plurality of terminals that take part to form a group of terminals, on an IP network is lost and fails to get to the server apparatus. According to the present invention, the above advantageous effect may be achieved without remodeling the terminal.

### BRIEF DESCRIPTION OF THE DRAWINGS

Fig.1 is a diagram showing a connection configuration of a server apparatus and a plurality of mobile terminals according to the present invention.
Fig.2 is a diagram showing a configuration of a first exemplary embodiment of a server apparatus of the present invention.
Fig.3 is a diagram showing a configuration of a second exemplary embodiment of a server apparatus of the present invention.

### EXPLANATION OF NUMERALS

120, 121, 122, 123 mobile terminals
130 mobile packet network
150 server apparatus
151 call control unit
155 packet reception unit
156 packet copying unit
157 quality information collection unit
158, 165 control packet generation/ transmission unit
159 packet transmission unit

### PREFERRED MODES FOR CARRYING OUT THE INVENTION

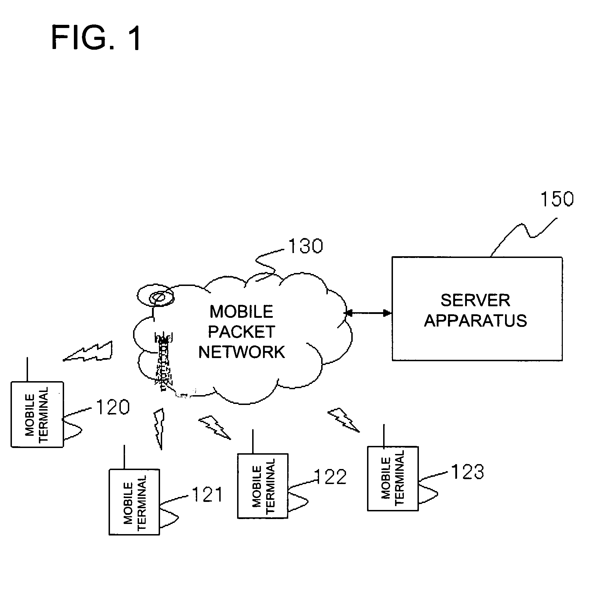

Referring to Figs.1 to 3, exemplary embodiments of the present invention will be described in detail. In the following exemplary embodiments, examples using a video signal (moving picture signal) are described.

Fig.1 shows a connection configuration example of a server apparatus and a set of mobile terminals on a mobile packet network. Fig.1 shows the case of a connection in which the number of terminals taking part in a group of terminals is four so that four mobile terminals 120 to 123 form the group and are connected to a mobile packet network 130. A server apparatus 150 is connected to the mobile packet network 130 to exchange video packets with the mobile terminals of the group of terminals via the mobile packet network 130. In a video PoC service or a video sharing service, one of the mobile terminals 120 to 123 takes the initiative at certain timing.

In the following, a terminal that takes the initiative is termed a first terminal. The mobile terminal that takes the initiative, such as the terminal 120, transmits a video packet to the server apparatus 150. Using a SIP (Session Initiation Protocol) signal which is a call control signal from the terminal, or an RTCP (RTP Control Protocol) signal which is a U-Plane signal, the server apparatus 150 determines which one of the N-number of the terminals of the same group takes the initiative at a specified timing. The server apparatus then receives a stream or packet from the terminal taking the initiative (first terminal), copies the stream or packet, and transmits the so copied stream or packet to the terminals other than the first terminal, here the mobile terminals 121 to 123.

As regards details of the SIP, reference may be made to RFC (Requests For Comments) 3261 of the IETF (Internet Engineering Task Force) and, as regards details of the RTCP, reference may be made to IETF RFC 1889. Protocols other than SIP or RTCP may also be used.

### <Exemplary Embodiment 1 >

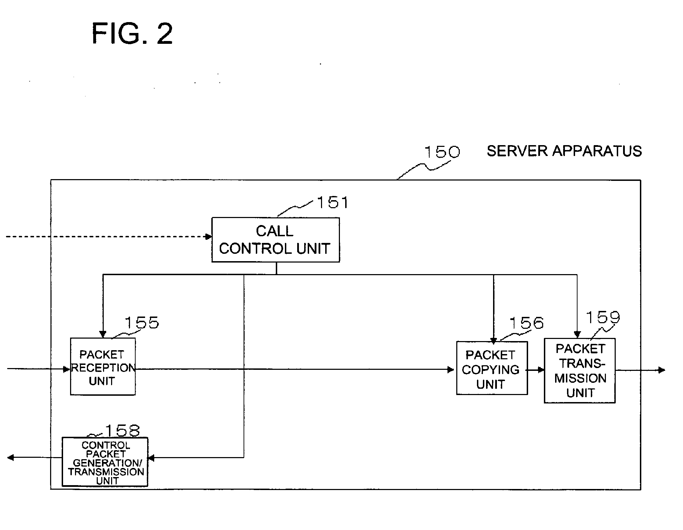

Fig.2 shows a configuration of a first exemplary embodiment of a server apparatus 150 according to the present invention. The server apparatus 150 includes a call control unit 151, a packet reception unit 155, a packet copying unit 156, a packet transmission unit 159 and a control packet generation/ transmission unit 158.

In Fig.2, it is assumed that a terminal taking the initiative informs the server apparatus of a status that the terminal takes the initiative using SIP. It is however also possible for a terminal taking the initiative to inform the server apparatus of a status that the terminal takes the initiative, using a protocol other than SIP, for example, RTCP.

By a SIP signal transmitted from a mobile terminal, the call control unit 151 receives information on such as the number on the mobile terminals (N) belonging to the same group and an IP address (or telephone number) of each mobile terminal, and the terminal taking the initiative out of the terminals belonging to the same group, e.g. its IP address or telephone number, and information on the timing of participation of each mobile terminal in the group, a command for session initiation, a command for session disconnection or the like. The call control unit 151 also receives information on capability of each mobile terminal using SDP (Session Description Protocol). As regards details of SDP, reference may be made to IETF RFC 2327.

The operation for a case where N number of mobile terminals are all taking part in the group at the time of session initiation and there is no mobile terminal newly taking part in the group halfway during the time of the session, will be described. This operation is termed an operation (1).

When the server apparatus 150 receives a command for session initiation using SIP from a mobile terminal, the call control unit 151 of the server apparatus 150 instructs the packet reception unit 155 to receive an RTP packet from a mobile terminal taking the initiative, here the mobile terminal 120, and informs the packet reception unit 155 of an IP address of the mobile terminal 120 as a transmission source. The packet reception unit 155 receives an RTP packet transmitted from the IP address of a transmission source and outputs the so received RTP packet to the packet copying unit 156.

Since there is no mobile terminal, newly taking part halfway during the time of the session, the call control unit 151 instructs the packet copying unit 156 to take (N-1) number of copies of each of RTP packets, in their entirety, each RTP packet received by the packet reception unit 155. The packet copying unit 156 supplies the copied RTP packets to the packet transmission unit 159.

The packet transmission unit 159 receives from the call control unit 151 a command for session initiation and a notification of an IP address of each of the (N-1) number of the mobile terminals as a transmission destination. The packet transmission unit 159 then transmits the (N-1) number of the copies of the RTP packets, supplied from the packet copying unit 156, to the (N-1) number of the mobile terminals.

This sequence of operations (packet reception, packet copying, and copied packet transmission) is repeated from the notification of the command for session initiation by the call control unit 151 until the notification of the command for session disconnection by the call control unit 151.

The operation for a case where another mobile terminal has newly taken part halfway during the time of the session will be now described. This operation is termed an operation (2). The operation until the other mobile terminal newly takes part is the same as the corresponding portion of the above-described operation (1).

In case another mobile terminal newly takes part in the group halfway during the time of the session, the call control unit 151 receives a SIP signal for connection from another mobile terminal. The call control unit thus recognizes that there is another terminal taking part in the group halfway.

When the SIP signal from another terminal is received, the call control unit 151 issues a command to the control packet generation/ transmission unit 158. The control packet generation/ transmission unit generates a control packet for instructing the transmission of a non-predictive (Intra) video frame (abbreviated to an I-frame), and transmits the control packet to the mobile terminal taking the initiative (that is, the first terminal, here the mobile terminal 120). This control operation, performed by the call control unit 151 and the control packet generation/ transmission unit 158, corresponds to the processing by a control unit of claim 1.

After receiving and analyzing the control packet, the mobile terminal taking the initiative, transmits a packet, including an I-frame, to the server apparatus 150.

As for the generation of the control packet in the control packet generation/ transmission unit 158, there are many methods that may be used. Typical of such method is a method of storing a control signal in an RTP header or a method of storing the control signal in a RTP payload. A method in the present embodiment uses a control packet in accordance with IETF RFC 4585. However, any suitable methods other than this may also be used.

The operation of the packet copying unit 156 and the packet transmission unit 159 is the same as that of the operation (1) above.

The configuration as well as the operation of the server apparatus 150 has been described above as the first exemplary embodiment. This operation of the server apparatus 150 corresponds to the first exemplary embodiment of a method for communication according to the present invention. That is, the method for communication includes the steps of:
a server apparatus (150) receiving a stream or a packet including at least a video signal and transmitted from a first terminal of a plurality of terminals taking part to form a group of terminals (for example, a terminal (120));
the server apparatus (150) copying part or all of the stream or the packet received;
the server apparatus transmitting the copied stream or packet to one or more of the multiple terminals except the first terminal; and
the server apparatus (150) transmitting to the first terminal a command which orders the first terminal to transmit a non-predictive video frame to the server apparatus (150), if another terminal newly takes part in the group halfway during transmission of the copied stream or packet.

Respective parts of the server apparatus 150 may have their processing or functions implemented by a program executed on a computer that constitutes the server apparatus 150. These parts of the server apparatus may be exemplified by the call control unit 151, packet reception unit 155, packet copying unit 156, control packet generation/ transmission unit 158 and the packet transmission unit 159 in Fig.2.

### <Exemplary Embodiment 2>

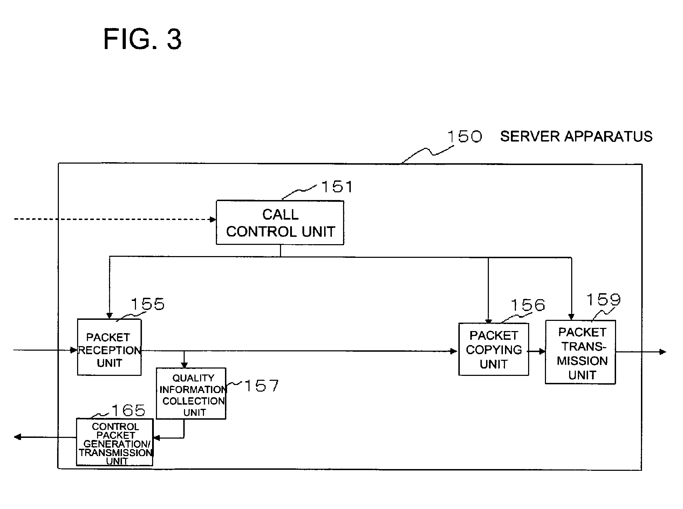

Fig.3 shows the configuration of a second exemplary embodiment of the present invention. In the present exemplary embodiment, a quality information collection unit 157 is added to the configuration of Fig.2. In Fig.3, the same reference numerals as those of Fig.2 designate the same components. It is noted that the description of these components is dispensed with because they perform the same operation.

Using a sequence number (SN) stored in an RTP header, the quality information collection unit 157 checks whether or not the SN changes in a continuous manner for entire RTP packets received by the packet reception unit 155.

If the SN shows a jump, it is determined that a packet loss has occurred at a timing of the SN jump. If it is determined that a packet loss has occurred, a command is transmitted to the control packet generation/ transmission unit 165 to generate a control packet to cause transmission of a non-predictive (Intra) video frame, abbreviated to an I-frame. This control packet is transmitted to the mobile terminal taking the initiative (that is, the first terminal, here the mobile terminal 120). It is observed that this control operation, performed by the quality information collection unit 157 and the control packet generation/ transmission unit 165, corresponds to the processing by the control unit of claim 3.

In the first and second exemplary embodiments, the control signal for instructing the mobile terminal taking the initiative, that is, the first terminal, to transmit the I-frame, is transmitted as a packet to the first terminal. This control signal may also be transmitted as the SIP Info method from the call control unit 151 to the first terminal. For details of the SIP Info method, reference may be made to IETF RFC2976.

In the first and second exemplary embodiments, there is no restriction to the video compression-encoding scheme. That is, the above-described embodiments may be applied to any suitable scheme for video compression- encoding, such as H.263, MPEG-4 or H.264.

In the first and second exemplary embodiments, the call control unit which performs C-Plane (Control-Plane) processing, and the packet reception unit, conversion unit and packet call control unit which perform U-Plane (User-Plane) processing, are arranged in a server apparatus. Alternatively, C-Plane processing and U-Plane processing may also be taken charge of by respective separate apparatus, in which case C-Plane and U-Plane may have scalabilities independently of each other.

In the second exemplary embodiment, the configuration as well as the operation of the server apparatus 150 has been described above. The operation of the server apparatus corresponds to the second exemplary embodiment of a method for communication of the present invention. Specifically, the method for communication includes the steps of:
a server apparatus (150) receiving a stream or a packet including at least a video signal and transmitted from a first terminal of a plurality of terminals taking part to form a group of terminals (such as the terminal (120));
the server apparatus (150) copying the received stream or packet in part or entirety thereof, and transmitting the copied stream or packet to one or more of the terminals different from the first terminal; and
the server apparatus (150) transmitting a command to the first terminal (120) to transmit a non-predictive video frame, in case the packet transmitted from the first terminal (120) is lost and not get to the server apparatus (150).

It goes without saying that the respective components of the server apparatus 150 may have their processing or functions implemented by a program executed on a computer that constitutes the server apparatus 150. It is observed that those respective components include the call control unit 151, packet reception unit 155, packet copying unit 156, quality information collection unit 157, control packet generation/transmission unit 165 and the packet transmission unit 159 in Fig. 3.

Similarly, it goes without saying that the configurations of the first and second exemplary embodiments described above may be combined in the server apparatus 150.

The operation and advantageous effects of the above exemplary embodiments will be described.

With the above described exemplary embodiments, in a server apparatus that receives a stream including at least a video signal and transmitted from a first terminal of a plurality of terminals that take part to form a group of terminals, copies the stream received, and transmits the copied stream to one or more of the terminals other than the first terminal, a control function is implemented such that picture quality deterioration may be suppressed on another terminal which takes part in the group of terminals halfway, without the necessity of remodeling the terminal.

With the above described exemplary embodiments, a control function is implemented on the server apparatus side such that even if a packet transmitted from the first terminal taking the initiative on an IP network, has been lost and failed to get to the server apparatus, picture quality deterioration may be suppressed on mobile terminals, without the necessity of remodeling the terminal side.

The disclosures of the aforementioned Patent Documents are incorporated by reference herein. The particular exemplary embodiments or examples may be modified or adjusted within the gamut of the entire disclosure of the present invention, inclusive of claims, based on the fundamental technical concept of the invention. Further, variegated combinations or selections of the elements disclosed herein may be made within the framework of the claims. That is, the present invention may encompass various modifications or corrections that may occur to those skilled in the art within the gamut of the entire disclosure of the present invention, inclusive of claim and the technical concept of the present invention.

## Claims

1. A server apparatus that receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, the server apparatus comprising
a control unit that transmits to the first terminal a command which orders the first terminal to transmit a non-predictive video frame to the server apparatus, in case another terminal takes part anew in the group of terminals halfway during the time of transmitting the copied stream or packet.

2. The server apparatus according to claim 1, comprising
a control unit that transmits to the first terminal a command which orders the first terminal to transmit a non-predictive video frame to the server apparatus, in case a packet transmitted from the terminal is lost and fails to get to the server apparatus.

3. A server apparatus that receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, the server apparatus comprising
a control unit that transmits to the first terminal a command which orders the first terminal to transmit a non-predictive video frame to the server apparatus, in case a packet transmitted from the first terminal is lost and fails to get to the server apparatus.

4. A method for communication comprising:
a server apparatus receiving a stream or a packet including at least a video signal and transmitted from a first terminal of a plurality of terminals that take part to form a group of terminals;
the server apparatus copying the received stream or packet received in part or entirety thereof;
the server apparatus transmitting the copied stream or packet to one or more of the terminals different from the first terminal; and
the server apparatus transmitting to the first terminal a command which orders the first terminal to transmit a non-predictive frame to the server apparatus, in case another terminal takes part anew in the group of terminals halfway during the time of transmitting the copied stream or packet.

5. The method for communication according to claim 4, comprising
the server apparatus transmitting to the first terminal a command which orders the first terminal to transmit a non-predictive video frame to the server apparatus, in case a packet transmitted from the first terminal is lost and fails to get to the server apparatus.

6. A method for communication comprising:
a server apparatus receiving a stream or a packet including at least a video signal and transmitted from a first terminal of a plurality of terminals that take part to form a group of terminals;
the server apparatus copying the received stream or packet received in part or entirety thereof;
the server apparatus transmitting the copied stream or packet to one or more of the terminals different from the first terminal; and
the server apparatus transmitting to the first terminal a command which orders the first terminal to transmit a non-predictive video frame to the server apparatus, in case a packet transmitted from the first terminal is lost and fails to get to the server apparatus.

7. A program that causes a server apparatus, which receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, to execute processing comprising:
transmitting to the first terminal a command which orders the first terminal to transmit a non-predictive video frame to the server apparatus, in case another terminal takes part anew in the group of terminals halfway during the time of transmitting the copied stream or packet.

8. The program according to claim 7, causing the server apparatus to execute processing comprising
transmitting to the first terminal a command which orders the first terminal to transmit a non-predictive video frame to the server apparatus, in case a packet transmitted from the first terminal is lost and fails to get to the server apparatus.

9. A program that causes a server apparatus, which receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, to execute processing comprising
transmitting to the first terminal a command which orders the first terminal to transmit a non-predictive video frame to the server apparatus, in case a packet transmitted from the first terminal is lost and fails to get to the server apparatus.

## Amended claims

### Amended claims under Art. 19.1 PCT

**1.** A server apparatus that receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, the server apparatus comprising
a control unit that transmits to the first terminal a command which orders the first terminal to transmit a non-predictive video frame to the server apparatus, in case another terminal takes part anew in the group of terminals halfway during the time of transmitting the copied stream or packet.

**2.** (Amended)The server apparatus according to claim 1, wherein the
control unit transmits to the first terminal a command which orders the first terminal to transmit a non-predictive video frame to the server apparatus, in case a packet transmitted from the terminal is lost and fails to get to the server apparatus.

**3.** A server apparatus that receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, the server apparatus comprising
a control unit that transmits to the first terminal a command which orders the first terminal to transmit a non-predictive video frame to the server apparatus, in case a packet transmitted from the first terminal is lost and fails to get to the server apparatus.

**4.** A method for communication comprising:
a server apparatus receiving a stream or a packet including at least a video signal and transmitted from a first terminal of a plurality of terminals that take part to form a group of terminals;
the server apparatus copying the received stream or packet received in part or entirety thereof;
the server apparatus transmitting the copied stream or packet to one or more of the terminals different from the first terminal; and
the server apparatus transmitting to the first terminal a command which orders the first terminal to transmit a non-predictive frame to the server apparatus, in case another terminal takes part anew in the group of terminals halfway during the time of transmitting the copied stream or packet.

**5.** The method for communication according to claim 4, comprising
the server apparatus transmitting to the first terminal a command which orders the first terminal to transmit a non-predictive video frame to the server apparatus, in case a packet transmitted from the first terminal is lost and has fails to get to the server apparatus.

**6.** A method for communication comprising:
a server apparatus receiving a stream or a packet including at least a video signal and transmitted from a first terminal of a plurality of terminals that take part to form a group of terminals;
the server apparatus copying the received stream or packet received in part or entirety thereof;
the server apparatus transmitting the copied stream or packet to one or more of the terminals different from the first terminal; and
the server apparatus transmitting to the first terminal a command which orders the first terminal to transmit a non-predictive video frame to the server apparatus, in case a packet transmitted from the first terminal is lost and fails to get to the server apparatus.

**7.** A program that causes a server apparatus, which receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, to execute processing comprising:
transmitting to the first terminal a command which orders the first terminal to transmit a non-predictive video frame to the server apparatus, in case another terminal takes part anew in the group of terminals halfway during the time of transmitting the copied stream or packet.

**8.** The program according to claim 7, causing the server apparatus to execute processing comprising
transmitting to the first terminal a command which orders the first terminal to transmit a non-predictive video frame to the server apparatus, in case a packet transmitted from the first terminal is lost and fails to get to the server apparatus.

**9.** A program that causes a server apparatus, which receives a stream or a packet including at least a video signal and transmitted from a first terminal of a plurality of terminals that take part to form a group of terminals, copies the stream or packet in part or entirety thereof and transmits the copied stream or packet to one or more of the terminals different from the first terminal, to execute processing comprising
transmitting to the first terminal a command which orders the first terminal to transmit a non-predictive video frame to the server apparatus, in case a packet transmitted from the first terminal is lost and fails to get to the server apparatus.
